# EUROPÄISCHE PATENTSCHRIFT

(11) **EP 3 031 772 B1**
(45) Veröffentlichungstag und Bekanntmachung des Hinweises auf die Patenterteilung: **06.12.2017**
(21) Anmeldenummer: 15192318.2
(22) Anmeldetag: 30.10.2015
(51) Int. Cl.: B66F 11/04, B66F 7/06, B66F 5/02

(54) **HEBEEINRICHTUNG, INSBESONDERE FÜR EIN INSPEKTIONSSYSTEM**
LIFTING DEVICE, IN PARTICULAR FOR AN INSPECTION SYSTEM
DISPOSITIF DE LEVAGE, EN PARTICULIER POUR UN SYSTÈME D'INSPECTION

(30) Priorität: 11.12.2014 DE 202014105994 U
(43) Veröffentlichungstag der Anmeldung: 15.06.2016
(73) Patentinhaber: iPEK International GmbH, 87477 Sulzberg (DE)
(72) Erfinder: Kennerknecht, Gerhard, 87561 Oberstdorf (DE); Zahnd, Fabian, 87437 Kempten (DE); Henn, Peter, 87452 Krugzell (DE)
(74) Vertreter: 2s-ip Schramm Schneider Bertagnoll Patent- und Rechtsanwälte Part mbB

(56) Entgegenhaltungen:
- EP-A1- 0 554 128
- DE-U1-202011 004 376
- JP-A- H0 374 644
- JP-A- H07 237 599
- US-A- 4 715 637
- US-A- 4 790 624
- US-A- 5 035 530

## Beschreibung

### Gebiet der Erfindung

Die Erfindung betrifft eine Hebeeinrichtung, insbesondere für ein Inspektions- und/oder Reinigungssystem, vorzugsweise Kanalinspektions- und/oder Reinigungssystem, sowie ein Inspektions- und/oder Reinigungssystem, insbesondere Kanalinspektions- und/oder Reinigungssystem mit einer erfindungsgemäßen Hebeeinrichtung.

### Hintergrund der Erfindung und Stand der Technik

Zur Durchführung von Rohr- bzw. Kanalinspektionen oder Kanalreinigungs- bzw. Wartungsarbeiten ist es bekannt, sogenannte Kanalinspektions- und/oder Wartungssysteme zu verwenden, die in das zu inspizierende bzw. wartende Rohr bzw. Kanalrohr eingebracht werden können und im Kanalrohr bewegt, etwa verfahren oder vorgeschoben werden können. Bei der Inspektion und/oder Wartung von Rohren bzw. Kanälen kann es vorteilhaft sein, die Arbeitsmittel, etwa Kamerasysteme oder Reinigungsdüsen, anzuheben, um diese zentral im Rohr bzw. Kanal auszurichten. Dies kann insbesondere dann erforderlich sein, wenn Rohre untersucht bzw. gewartet werden, die einen deutlich größeren Durchmesser als das Rohrinspektions- bzw. Wartungssystem aufweisen.

In **Fig. 1** und **Fig. 2** ist ein aus der DE 20 2011 004 376 U1 bekanntes Rohrinspektionssystem 10 gezeigt. Das Rohrinspektionssystem 10, das auch als Wartungssystem verwendet werden kann, weist einen Fahrwagen 8 auf, an dem eine Hebeeinrichtung 1 angeordnet ist. An der Hebeeinrichtung 1 ist über eine Befestigungseinrichtung 3a eine Kameraeinrichtung 3 befestigt. Die Hebeeinrichtung 1 ist in der Lage, die Kamera 3 über den Fahrwagen 8 anzuheben. Zur Inspektion eines Kanalrohres kann die Kamera 3 mit der Hebeeinrichtung 1 angehoben werden, sodass sich die optische Achse der Kamera 3 etwa in der Zentrallängsachse des zu untersuchenden Kanalrohres befindet.

Die aus dem Stand der Technik bekannte Hebeeinrichtung 1 weist Hebearme 2, 6 auf, die über Achsen bzw. Drehachsen 5 schwenkbar an einen Grundträger 4 angelenkt sind. Teleskoparme 7 sind über einen oberen Drehpunkt und einen unteren Drehpunkt sowohl mit dem Hebearm 2 als auch mit dem Grundträger 4 verbunden. Mit Hilfe der angetriebenen Teleskoparme 7, die pneumatisch/hydraulisch ein- bzw. ausgefahren werden können, können die Hebearme 2, 6 nach oben bzw. nach unten geschwenkt werden, wodurch die Kameraeinheit 3 angehoben bzw. abgesenkt wird. Alternativ kann das Anheben der Hebearme auch elektrisch über die Drehachse mit einer Rutschkupplung bewirkt werden, wobei das Anheben mit den Teleskoparmen, die beispielsweise als Gasdruckfedern ausgebildet sein können, unterstützt werden kann

Das Vorsehen pneumatischer/hydraulischer Hubvorrichtungen, wie pneumatisch/hydraulisch betriebene Teleskoparme, hat den Nachteil, dass diese einen relativ hohen Platzbedarf aufweisen, was sich insbesondere bei Inspektions-/Wartungssystemen für Rohre mit kleinem Durchmesser nachteilig auswirkt. Zudem unterliegen pneumatische/hydraulische Hubvorrichtungen einem nicht unerheblichen Verschleiß, was regelmäßige Wartungsarbeiten an den pneumatischen/hydraulischen Hubvorrichtungen zur Folge hat.

Aus der EP 0 554 128 A1 ist ein Stellglied mit Kontraktions-Ausdehnungsmechanismus bekannt, mit einer Anordnung von Verbindungen aus einer Formerinnerungslegierung, welche den Kontraktions-Ausdehnungsmechanismus bildet, welcher die Verbindungsanordnung als seine eigene Antriebsquelle gebraucht. Formsteuernde Heizeinrichtungen sind mit jeweiligen Verbindungen der Verbindungsanordnung verknüpft, wobei sich die Beträge des von den Heizeinrichtungen erzeugten elektrischen Widerstandes unterscheiden. Das Stellglied kann als ein Arbeitsmodul für eine Mikromaschine verwendet werden.

Aus der JP 07237599 A ist ein Formgedächtnis-Aktuator bekannt, der eine Feder aus einer Formgedächtnislegierung aufweist, die bei einem Anstieg einer inneren Temperaturdifferenz eine Formveränderung erfährt und so eine Kraft ausüben kann.

Aus der US 5,035,530 A ist ein Aktuator bekannt, der eine Formgedächtnislegierung aufweist. Der Aktuator ist zwischen zwei Körper angeordnet. Innerhalb eines bestimmten Temperaturbereiches dehnt sich der Aktuator aus, sodass die beiden Körper relativ zueinander bewegt werden. Damit kein ein beweglicher Arm realisiert werden.

Aus der US 4,790,624 A ist eine Vorrichtung zur räumlichen Ausrichtung eines flexiblen Arms bekannt. Die Vorrichtung kann als Feder ausgestaltet sein, die eine Formgedächtnislegierung aufweist. Bestimmte Abschnitte der Feder können erhitzt werden, sodass ein kontrolliertes Auslenken der Feder erreicht wird.

### Aufgabe der Erfindung

Der Erfindung liegt daher die Aufgabe zugrunde, die aus dem Stand der Technik bekannten Nachteile zumindest teilweise zu vermeiden und Lösungen bereitzustellen, die einerseits eine Platz sparende Ausgestaltung einer Hebeeinrichtung ermöglichen und mit denen anderseits die Wartungsintervalle für die Wartung der Hebeeinrichtung erheblich verlängert werden können.

### Erfindungsgemäße Lösung

Erfindungsgemäß wird diese Aufgabe mit einer Hebeeinrichtung nach dem unabhängigen Anspruch 1 gelöst. Vorteilhafte Weiterbildungen und Ausgestaltungen der Erfindung sind in den jeweiligen abhängigen Ansprüchen angegeben.
Bereitgestellt wird demnach eine Hebeeinrichtung für ein Inspektionssystem und/oder Reinigungssystem, insbesondere zum Anheben von Arbeitsmitteln, etwa einer Kameraeinrichtung oder einer Spüleinrichtung, mit einem Grundträger und einer relativ zum Grundträger bewegbaren Hebeeinheit, wobei die Hebeeinrichtung mindestens ein mit der Hebeeinheit zusammenwirkendes Stellmittel zum Bewegen der Hebeeinheit aufweist, wobei sich die Hebeeinrichtung dadurch auszeichnet, dass
- das Stellmittel zumindest ein Formgedächtniselement aufweist, welches in Abhängigkeit von zumindest einer Einflussgröße seine Form reversibel ändert, wobei
- die Formänderung des Formgedächtniselements das Bewegen der Hebeeinheit relativ zum Grundträger bewirkt.
Zum Bewegen der Hebeeinheit kann damit in vorteilhafterweise das Stellmittel bzw. das Formgedächtniselement des Stellmittels aktiviert werden, sodass sich die Form des Formgedächtniselements ändert. Durch diese Änderung des Formgedächtniselements wird die Hebeeinheit aus seiner Neutralstellung ausgelenkt bzw. angehoben, sodass die an der Hebeeinheit angeordneten Arbeitsmittel ebenfalls angehoben werden. Bei Bedarf kann das Formgedächtniselement des Stellmittels wieder deaktiviert werden, sodass die Hebeeinheit aufgrund einer Rückstellkraft eines Rückstellmittels oder aufgrund seines Eigengewichts wieder in die Neutralstellung zurückkehrt, in der das Formgedächtniselement seine ursprüngliche Form aufweist.

Das Formgedächtniselement des Stellmittels kann
- einerseits direkt oder indirekt mit der Hebeeinheit und
- andererseits direkt oder indirekt mit dem Grundträger
gekoppelt sein.

Vorteilhaft ist es, wenn das Formgedächtniselement ein längliches Formgedächtniselement, insbesondere Formgedächtnisdraht, umfasst, das in Abhängigkeit von der Einflussgröße seine Länge ändert, vorzugsweise verringert.

Das Stellmittel kann zusätzlich zumindest ein Zugelement aufweisen, welches
- einerseits direkt oder indirekt mit dem Formgedächtniselement und
- andererseits direkt oder indirekt mit der Hebeeinheit oder mit dem Grundträger verbunden ist.

Das Stellmittel kann einen Flaschenzug aufweisen, wobei das Formgedächtniselement Teil des Flaschenzuges ist. Dies hat den Vorteil, dass das Formgedächtniselement für ein Auslenken bzw. Anheben der Hebeeinheit der Hebeeinrichtung geringere Kräfte zur Verfügung stellen muss, sodass auch kostengünstige Formgedächtniselemente zum Einsatz kommen können.

Die Einflussgröße kann die Temperatur des Formgedächtniselements sein, wobei die für ein vorbestimmtes Bewegen der Hebeeinheit relativ zum Grundträger benötigte Temperatur dem Formgedächtniselement direkt oder indirekt beaufschlagbar ist. In Abhängigkeit von der beaufschlagten Temperatur ist es damit in vorteilhafter Weise möglich, die Hebeeinheit um unterschiedliche Amplituden auszulenken bzw. anzuheben.

Das Formgedächtniselement kann mit einer Steuer- und/oder Regeleinrichtung gekoppelt sein, die angepasst ist, das Formgedächtniselement mit der für ein vorbestimmtes Bewegen der Hebeeinheit relativ zum Grundträger benötigten Temperatur zu beaufschlagen.

Vorzugsweise ist die Steuer- und/oder Regeleinrichtung angepasst, elektrischen Strom in das Formgedächtniselement einzuspeisen, um es dadurch zu erwärmen und so eine Formänderung des Formgedächtniselements zu bewirken.

Vorteilhaft ist es, wenn die Hebeeinrichtung mindestens ein mit der Hebeeinheit zusammenwirkendes Rückstellmittel aufweist, wobei eine Rückstellkraft des Rückstellmittels entgegen einer Stellkraft des Stellmittels wirkt. Bei einer Deaktivierung des Formgedächtniselements des Stellmittels, also bei einer Nicht-beaufschlagung des Formgedächtniselements mit der Einflussgröße oder bei einer Reduzierung der Einflussgröße, kann die Hebeeinheit wieder in ihre Ausgangsposition zurückkehren bzw. wird die Hebeeinheit durch das Rückstellmittel wieder in ihrer Ausgangsposition zurückgebracht.

Vorteilhaft ist es, wenn das Rückstellmittel zumindest ein Federelement umfasst.

Der Grundträger kann lösbar an einem Fahrwagen des Inspektionssystems befestigbar sein oder Teil eines Fahrwagens des Inspektionssystems sein.

Die Hebeeinheit kann einen Hebearm umfassen, der um eine Schwenkachse relativ zum Grundträger schwenkbar ist, wobei das Stellmittel
- einerseits an einer dem Grundträger zugeordneten ersten Befestigungseinheit und
- andererseits an einer der Hebeeinheit zugeordneten zweiten Befestigungseinheit
befestigt ist.

Das Stellmittel kann von der ersten Befestigungseinheit über eine Umlenkstelle zu der zweiten Befestigungseinheit geführt sein, wobei das Stellmittel an der Umlenkstelle umgelenkt ist.

Die Umlenkstelle kann eine Umlenkeinrichtung, insbesondere eine Umlenkrolle umfassen.

In einer Ausgestaltung der Erfindung kann die Hebeeinheit um eine Schwenkachse relativ zum Grundträger schwenkbar sein, wobei die Hebeeinrichtung einen Hubarm aufweist, der
- mit einem ersten Ende an der Hebeeinheit angelenkt ist und
- mit einem zweiten Ende in Längsrichtung zum Grundträger bewegbar an dem Grundträger angeordnet ist,
wobei das Stellmittel einerseits mit der Hebeeinheit und andererseits mit dem Hubarm gekoppelt ist, wobei die Formänderung des Formgedächtniselements bewirkt, dass das zweite Ende des Hubarms in Richtung Schwenkachse bewegt wird und dadurch einen Winkel zwischen der Hebeeinheit und dem Grundträger vergrößert.

Dem zweiten Ende des Hubarms kann ein Schlitten zugeordnet sein, an dem das zweite Ende des Hubarms angelenkt ist, wobei der Schlitten in Längsrichtung zum Grundträger bewegbar ist und wobei das Stellmittel mit dem Schlitten gekoppelt ist.

In einer Ausgestaltung der Erfindung kann die Hebeeinrichtung ein erstes Scherenarmpaar und ein zweites Scherenarmpaar aufweisen, die jeweils
- zwei gelenkig miteinander verbundene Scherenarme aufweisen, und
- einerseits an den Grundträger und andererseits an der Hebeeinheit angelenkt sind,
wobei zwischen den beiden Scherenarmpaaren das Stellmittel angeordnet ist, das einerseits mit dem ersten Scherenarmpaar und andererseits mit den zweiten Scherenarmpaar gekoppelt ist.

In einer Ausgestaltung der Erfindung kann die Hebeeinrichtung zwei Scherenarme aufweisen, die sich in einem Drehpunkt kreuzen und in diesem Drehpunkt um eine Achse drehbar miteinander verbunden sind, wobei zwischen
- den beiden Abschnitten der Scherenarme oberhalb des Drehpunktes und/oder
- den beiden Abschnitten der Scherenarme unterhalb des Drehpunktes
das Stellmittel angeordnet ist und beiderseits unterhalb bzw. oberhalb des Drehpunktes mit den jeweiligen Abschnitten der Scherenarme gekoppelt ist.

An der ersten Befestigungseinheit oder an der zweiten Befestigungseinheit kann eine Platine angeordnet sein, die die Steuer- und/oder Regeleinrichtung aufweist, wobei die Platine operativ mit dem Formgedächtniselement gekoppelt ist.

Die Hebeeinrichtung kann einen Temperatursensor aufweisen, wobei die Steuer- und/oder Regeleinrichtung angepasst ist, in Abhängigkeit von einer gemessenen Umgebungstemperatur das Formgedächtniselement mit der benötigten Temperatur zu beaufschlagen.

Bereit gestellt wird durch die Erfindung ferner ein Inspektionssystem und/oder Reinigungssystem, insbesondere Kanalinspektions- und/oder Reinigungssystem, das zumindest eine erfindungsgemäße Hebeeinrichtung aufweist.

Die Hebeeinrichtung kann lösbar an einem Fahrwagen des Inspektionssystems und/oder Reinigungssystems angeordnet sein.

Das Inspektionssystem und/oder Reinigungssystem kann über eine Kommunikationsverbindung mit einer Kontrolleinrichtung gekoppelt sein, um von der Kontrolleinrichtung Steuersignale zu empfangen, die angeben, um welche Höhe die Hebeeinheit anzuheben ist.

Vorteilhaft ist es, wenn die Kommunikationsverbindung drahtlos ausgebildet ist.

An der Hebeeinheit können Arbeitsmittel angeordnet sein, wobei die Arbeitsmittel eine Bildaufnahmeeinrichtung, eine Satellitenkamera, eine Spüleinrichtung, insbesondere Spülkopf, ein Greifwerkzeug, ein Fräswerkzeug, oder Kombinationen hiervon umfassen.

Die erfindungsgemäße Hebeeinrichtung bzw. das erfindungsgemäße Inspektions- und/oder Reinigungssystem ist nicht nur für den Einsatz in Kanal- bzw. Rohrsystemen geeignet. Sie können auch zur Inspektion und/oder Wartung von unzugänglichen Bereichen, etwa in Industrieanlagen, verwendet werden. Ferner kann die erfindungsgemäße Hebeeinrichtung nicht nur in Inspektions- und/oder Reinigungssystemen verwendet werden, sondern überall dort, wo Einrichtungen oder Vorrichtungen angehoben werden müssen.

### Kurzbeschreibung der Figuren

Weitere Einzelheiten und Merkmale der Erfindung sowie konkrete, insbesondere vorteilhafte Ausführungsbeispiele der Erfindung ergeben sich aus der nachfolgenden Beschreibung in Verbindung mit der Zeichnung. Es zeigt:

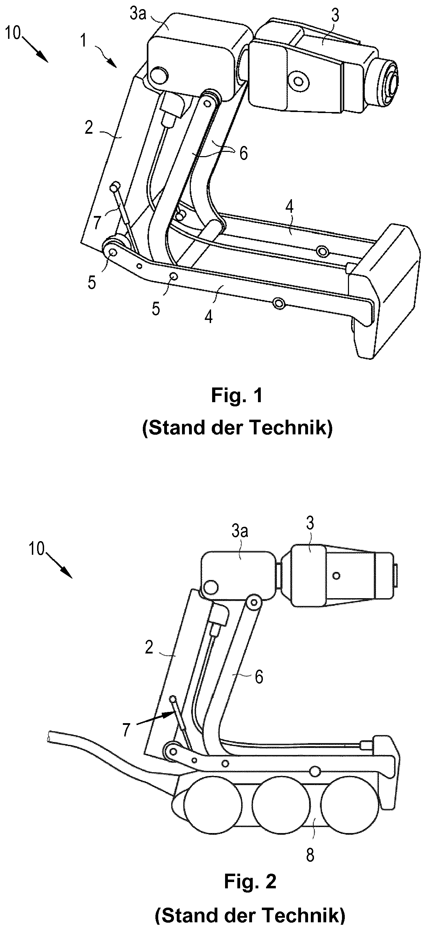

- Fig. 1: eine aus dem Stand der Technik bekannte Hebeeinrichtung;
- Fig. 2: eine aus dem Stand der Technik bekannte Inspektionseinrichtung mit einer aus dem Stand der Technik bekannten Hebeeinrichtung;
- Fig. 3: eine Inspektionseinrichtung mit einer Ausführungsform erfindungsgemäßen Hebeeinrichtung;
- Fig. 4: ein erfindungsgemäßes Stellmittel für eine erfindungsgemäße Hebeeinrichtung;
- Fig. 5: eine alternative Ausgestaltung des in Fig. 4 gezeigten erfindungsgemäßen Stellmittels;
- Fig. 6: eine weitere Ausführungsform einer erfindungsgemäßen Hebeeinrichtung;
- Fig. 7: eine weitere Ausführungsform einer erfindungsgemäßen Hebeeinrichtung;
- Fig. 8: eine weitere Ausführungsform einer erfindungsgemäßen Hebeeinrichtung;
- Fig. 9: eine noch weitere Ausführungsform einer erfindungsgemäßen Hebeeinrichtung;
- Fig. 10: eine noch weitere Ausführungsform einer erfindungsgemäßen Hebeeinrichtung;
- Fig. 11: eine erfindungsgemäße Hebeeinrichtung, die einem als Schiebesystem ausgestaltetes Inspektionssystem verwendet wird; und
- Fig. 12: einen Fahrwagen eines Inspektionssystems, wobei der Fahrwagen die erfindungsgemäße Hebeeinrichtung aufweist.

### Detaillierte Beschreibung der Erfindung

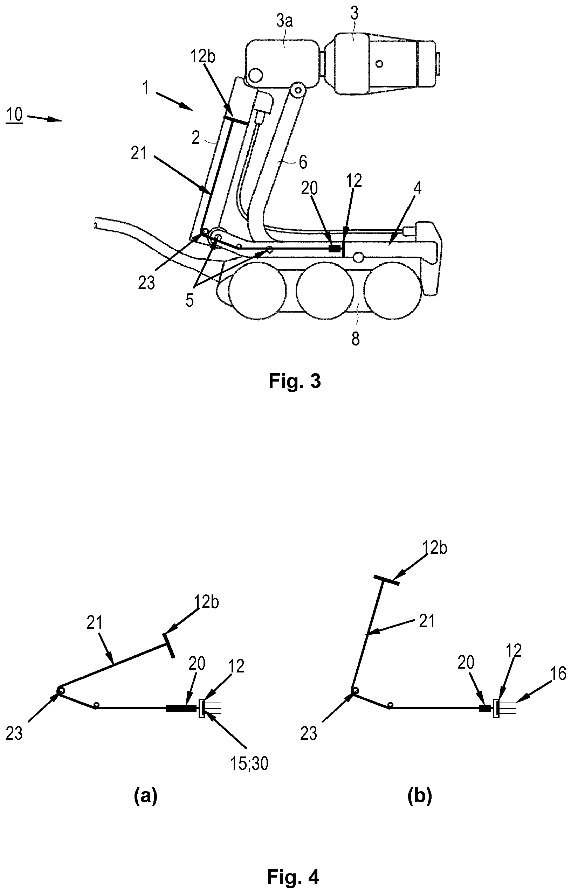

**Fig. 3** zeigt ein erfindungsgemäßes Inspektions- und/oder Reinigungssystem 10 mit einem Fahrwagen 8 und einer an dem Fahrwagen angeordneten erfindungsgemäßen Hebeeinrichtung 1.

Die Hebeeinrichtung 1 weist eine hintere Hebeeinheit 2 und eine vorderer Hebeeinheit 6 auf, die als Hebearme ausgebildet sind. Die Hebearme 2, 6 sind jeweils über Achsen bzw. Schwenkachsen 5 an einem Grundträger 4 der Hebeeinrichtung 1 angelenkt und können relativ zum Grundträger 4 nach oben bzw. nach unten geschwenkt werden. Alternativ können die Hebearme 2, 6 auch direkt am Fahrwagen angelenkt sein, wobei der Fahrwagen in diesem Fall den Grundträger bildet. Die in Fig. 3 gezeigt Ausgestaltung, bei der die Hebearme 2, 6 an dem Grundträger 4 angelenkt sind hat den Vorteil, dass der Grundträger 4 lösbar an dem Fahrwagen 8 angeordnet werden kann, sodass die gesamte Hebeeinrichtung 1 von dem Fahrwagen 8 abgenommen werden kann bzw. nur bei Bedarf an dem Fahrwagen befestigt werden kann.

An den oberen bzw. vorderen Enden der Hebearme 2, 6 ist eine Befestigungseinrichtung 3a angeordnet. An der Befestigungseinrichtung 3a ist hier eine Bildaufnahmeeinrichtung 3, etwa eine Inspektionskamera angeordnet. Mit der Befestigungseinrichtung 3a kann die Bildaufnahmeeinrichtung 3 um ihre Längsachse gedreht und/oder nach oben/unten geschwenkt werden. Mit Hilfe der Hebeeinheiten bzw. Hebearme 2, 6 kann die Bildaufnahmeeinrichtung 3 angehoben werden, beispielsweise um die optische Achse der Kamera in die Längsachse des zu inspizierenden Rohres zu bringen. Anstelle der Bildaufnahmeeinrichtung 3 können auch andere Arbeitsmittel, etwa Spüleinrichtungen, Fräswerkzeuge, Greifwerkzeuge oder sonstige für eine Inspektion und/oder Wartung bzw. Reinigung benötigte Werkzeuge, an den Hebearmen 2, 6 angeordnet bzw. befestigt werden. Ebenso kann anstelle von zwei Hebearmen 2, 6 auch nur ein Hebearm, etwa der hintere Hebearm 2 vorgesehen sein.

Erfindungsgemäß weist die Hebeeinrichtung 1 ein Stellmittel auf, das mit der Hebeeinheit 2 (oder mit der Hebeeinheit 6) zusammenwirkt.

Das Stellmittel ist vorgesehen, um die Hebeeinheit 2 aus einer Neutralstellung entgegen einer Rückstellkraft eines in Fig. 3 nicht gezeigten Rückstellmittels (z.B. eine Rückstellfeder) auszulenken bzw. nach oben zu schwenken. In Fig. 3 ist die Hebeeinrichtung 1 gezeigt, bei der sich die Hebeeinheit 2 nicht in der Neutralstellung, d.h. in einer nach oben geschwenkten Stellung befindet. Die Rückstellkraft kann auch durch das Eigengewicht der Hebeeinheit 2 bewirkt werden.

Erfindungsgemäß weist das Stellmittel ein Formgedächtniselement 20 auf, das hier als länglicher Formgedächtnisdraht ausgebildet ist.

Das Stellmittel weist hier zusätzlich Zugelemente 21 auf, die hier jeweils mit dem Formgedächtniselement 20 und mit einer ersten Befestigungseinheit 12 bzw. mit einer zweiten Befestigungseinheit 12b verbunden sind. Die erste Befestigungseinheit 12 ist an dem Hebearm 2 befestigt und die zweite Befestigungseinheit 12b ist an dem Grundträger 4 bzw. an dem Fahrwagen 8 befestigt. Als Zugelemente 21 können beispielsweise Drähte, Seile oder dergleichen verwendet werden. Vorteilhaft ist es, wenn die Zugelemente 21 bei Einwirkung einer Zugkraft ihre Länge nicht verändern.

In einer alternativen Ausgestaltung kann auf die Zugelemente 21 auch verzichtet werden und der Formgedächtnisdraht 20 kann direkt an den beiden Befestigungseinheiten 12, 12b befestigt sein.

Bei der in Fig. 3 gezeigten Ausgestaltung ist das Stellmittel (hier das Zugelement 21 des Stellmittels) über eine als Umlenkrolle 23 ausgestaltete Umlenkstelle von der ersten Befestigungseinheit 12 zur zweiten Befestigungseinheit 12b geführt, wobei das Stellmittel an der Umlenkrolle 23 umgelenkt wird. Zudem verläuft das Stellmittel zwischen der ersten Befestigungseinheit 12 und der Umlenkrolle 23 im Wesentlichen parallel zur Längsachse des Grundträgers 4 und zwischen der Umlenkrolle 23 und der zweiten Befestigungseinheit 12b im Wesentlichen parallel zur Längsachse des Hebearms 2. Vorzugsweise sind das Stellmittel und die beiden Befestigungseinheiten im Inneren bzw. in rohrförmig ausgestalteten Abschnitten des Grundträgers 4 und des Hebearms 2 angeordnet.

Zum Auslenken bzw. Nach-Oben-Schwenken der Hebeeinheit 2 aus seiner Neutralstellung wird das Stellmittel verkürzt, indem das Formgedächtniselement 20 mit einer physikalischen Größe beaufschlagt wird, die eine Formänderung des Formgedächtniselements 20 bewirkt. Die Formänderung des Formgedächtniselements 20 ist vorzugsweise dergestalt, dass sich bei Beaufschlagung des Formgedächtniselements 20 mit der physikalischen Größe die Länge des Formgedächtniselements reduziert. Aufgrund der reduzierten Länge des Formgedächtniselements 20 reduziert sich auch die Gesamtlänge des Stellmittels. Durch das Verkürzen des Stellmittels wirkt auf die zweite Befestigungseinheit 12b eine Zugkraft, die den Hebearm 2 nach oben schwenkt.

Bei der hier gezeigten Ausgestaltung einer erfindungsgemäßen Hebeeinrichtung und bei den nachfolgend beschriebenen Ausgestaltungen einer erfindungsgemäßen Hebeeinrichtung werden für das Formgedächtniselement 20 solche Materialien verwendet, die bei einer Temperaturveränderung, beispielsweise bei einer Temperaturerhöhung, ihre Form bzw. Länge verändern.

Die Verwendung von Formgedächtniselementen als Stellmittel oder Bestandteil des Stellmittels hat den Vorteil, dass dadurch sehr hohe Stellkräfte bei sehr geringem Materialeinsatz erreicht werden können. Damit kann ein besonders platzsparendes Stellmittel zur Verfügung gestellt werden, was wiederum die Herstellung von sehr kompakten und platzsparenden Hebeeinrichtungen ermöglicht. Zudem unterliegen die Formgedächtniselemente keinem oder einem nur sehr geringen Verschleiß, wodurch die Wartungsintervalle verlängert werden können. Des Weiteren weist das Stellmittel gegenüber hydraulischen/pneumatischen Systemen nur ein sehr geringes Gewicht auf, sodass das Gewicht der Hebeeinrichtung und damit des gesamten Inspektions- bzw. Reinigungssystems reduziert werden kann.

Als vorteilhaft hat sich herausgestellt, wenn für das Formgedächtniselement 20 Formgedächtnislegierungen oder Formgedächtnispolymere verwendet werden, die den sogenannten Zwei-Weg-Effekt aufweisen, d.h. beim Abkühlen wieder ihre ursprüngliche Form einnehmen. Vorteilhafte Formgedächtnislegierungen sind beispielsweise Nickel-Titan, Nickel-Titan-Kupfer, Kupfer-Zink, Kupfer-Zink-Aluminium, Kupfer-Aluminium-Nickel, Eisen-Nickel-Aluminium, Eisen-Mangan, Silizium oder Zink-Gold-Kupfer.

Die zum Verkürzen des Formgedächtniselements 20 erforderliche Erwärmung kann beispielsweise über Widerstandselemente, über induktive Erwärmung oder dergleichen bewirkt werden. In einer einfachen Form wird das Formgedächtniselement 20 mit einem elektrischen Strom beaufschlagt, der eine entsprechende Erwärmung des Formgedächtniselements bewirkt.

**Fig. 4** zeigt ein erfindungsgemäßes Stellmittel für die in Fig. 3 gezeigte Hebeeinrichtung, wobei in Abbildung (a) das Stellmittel bei einer Neutralstellung der Hebeeinrichtung und in Abbildung (b) das Stellmittel bei einer ausgelenkten bzw. nach oben geschwenkten Stellung des Hebearms der Hebeeinrichtung gezeigt ist.

Das Formgedächtniselement 20 des Stellmittels wird in Abbildung (a) nicht mit einer physikalischen Größe (z.B. Temperatur) beaufschlagt, sodass das Formgedächtniselement 20 seine ursprüngliche Länge aufweist. In Abbildung (b) hingegen wird das Formgedächtniselement 20 des Stellmittels mit einer physikalischen Größe (z.B. Temperatur) beaufschlagt, sodass sich die Länge des Formgedächtniselement 20 reduziert. Die Länge des Zugelements 21 bleibt hingegen gleich bzw. ändert sich nicht. Der Auslenkwinkel zwischen dem Hebearm 2 und dem Grundträger 4 bzw. dem Fahrwagen 8 hängt demnach von der Länge des Stellmittels und die Länge des Stellmittels von der Temperatur, mit der das Formgedächtniselement 20 beaufschlagt wird, ab.

Durch die Reduzierung der Länge des Formgedächtniselements 20 reduziert sich also die Gesamtlänge des Stellmittels, sodass auf die zweite Befestigungseinheit 12b, die fest mit dem Hebearm 2 verbunden ist, eine Zugkraft wirkt, die den Hebearm 2 nach oben schwenkt.

An dem anderen Ende ist das Formgedächtniselement 20 entweder direkt oder über ein weiteres Zugelement an der ersten Befestigungseinheit 12 befestigt, die fest mit dem Grundträger oder mit dem Fahrwagen 8 verbunden ist.

An der ersten Befestigungseinheit 12 ist eine Platine 15 einer Steuer- und/oder Regeleinrichtung 30 angeordnet. Der Platine 15 können Steuer-/Datenkabel 16 zugeführt werden, die mit einer außerhalb des Kanalrohres angeordneten Kontrolleinrichtung verbunden sind, um die Hebeeinrichtung zu steuern. Ferner ist das Formgedächtniselement 20 ist mit der Steuer- und/oder Regeleinrichtung 30 gekoppelt, sodass die Steuer- und/oder Regeleinrichtung das Formgedächtniselement 20 mit der physikalischen Größe beaufschlagen kann, die eine Formänderung, insbesondere Verkürzung des Formgedächtniselements 20 bewirkt.

Die Hebeeinrichtung bzw. die Steuer- und/oder Regeleinrichtung kann einen Temperatursensor aufweisen, wobei die Steuer- und/oder Regeleinrichtung angepasst ist, in Abhängigkeit von einer gemessenen Umgebungstemperatur das Formgedächtniselement 20 mit der benötigten Temperatur zu beaufschlagen. Die Steuer- und/oder Regeleinrichtung kann angepasst sein, über die Steuer-/Datenkabel 16 Daten zu empfangen, die einen Sollwinkel umfassen, und für den Sollwinkel die benötigte Temperatur zu ermitteln, mit der das Formgedächtniselement 20 zu beaufschlagen ist, wobei die zu beaufschlagende Temperatur gegebenenfalls von der Umgebungstemperatur abhängig sein kann. Die für den Sollwinkel benötigte Temperatur kann beispielsweise anhand einer in der Steuer- und/oder Regeleinrichtung hinterlegten Kennlinie ermittelt werden, wobei die Kennlinie abhängig von dem Material des Formgedächtniselements ist. In der Steuer- und/oder Regeleinrichtung können Kennlinien für verschiedene Materialien hinterlegt sein.

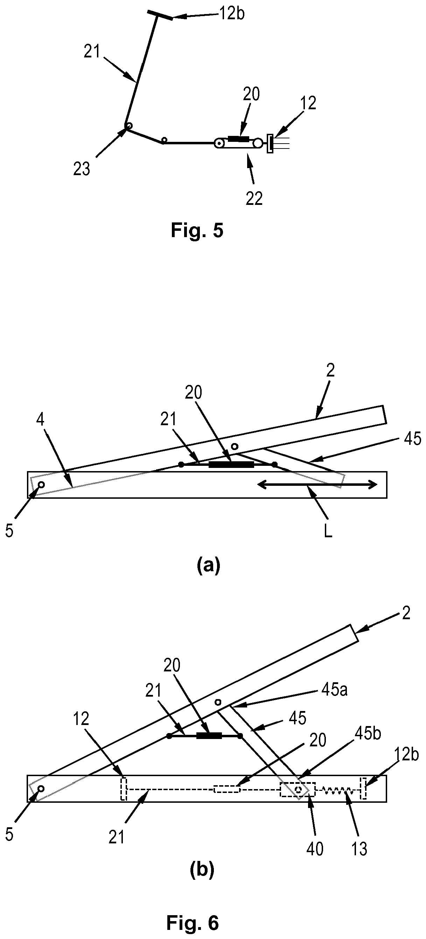

**Fig. 5** zeigt eine alternative Ausgestaltung des in Fig. 4 gezeigten erfindungsgemäßen Stellmittels.

Der Grundaufbau des in Fig. 5 gezeigten Stellmittels entspricht im Wesentlichen dem in Fig. 4 gezeigten Aufbau. Der Unterschied besteht lediglich darin, dass das Formgedächtniselement 20 Bestandteil eines Flaschenzuges 22 ist, wobei die Zugelemente 21 an dem Flaschenzug 22 befestigt sind.

In dem Flaschenzug 22 ist das Formgedächtniselement 20 angeordnet, dessen Länge sich bei Erwärmung reduziert, sodass sich der Abstand zwischen den beiden Rollen des Flaschenzuges 22 ebenfalls reduziert und damit auch die Gesamtlänge des Stellmittels verringert wird.

Die Verwendung eines Flaschenzuges 22 als Bestandteil des Stellmittels hat den Vorteil, dass die von dem Formgedächtniselement 20 zur Verfügung zu stellenden Stellkräfte niedrig gehalten werden.

**Fig. 6** zeigt eine schematische Ausführungsform einer erfindungsgemäßen Hebeeinrichtung, wobei in Abbildung (a) die Hebeeinrichtung in einer Neutralstellung und in Abbildung (b) die Hebeeinrichtung mit einem angehobenen bzw. nach oben geschwenkten Hebearm 2 gezeigt ist.

Die Hebeeinrichtung weist einen Hebearm 2 auf, der um eine Drehachse 5 schwenkbar an einem Grundträger 4 angeordnet ist. Ferner weist die Hebeeinrichtung einen Hubarm 45 auf, der mit einem ersten Ende 45a an dem Hebearm 2 angelenkt ist und mit einem zweiten Ende 45b an dem Grundträger 4 angeordnet ist, wobei das zweite Ende 45b relativ zum Grundträger 4 entlang der Längsachse des Grundträgers bzw. in Längsrichtung L zum Grundträger bewegbar ist. Das zweite Ende 45b des Hubarms 45 kann in eine im Grundträger vorgesehene Führungsschiene eingreifen.

Zwischen dem Hebearm 2 und dem Hubarm 45 ist die Stelleinrichtung angeordnet, wobei die Stelleinrichtung einerseits mit dem Hebearm 2 und andererseits mit dem Hubarm 45 gekoppelt ist. Durch Aktivieren des Formgedächtniselements 20 des Stellmittels, d.h. durch Beaufschlagen des Formgedächtniselements 20 mit einer Temperatur wird die Länge des Stellmittels reduziert, was bewirkt, dass der Hubarm 45 in Richtung Drehachse 5 geschwenkt wird und so den Hebearm 2 anhebt.

Nach Deaktivieren des Formgedächtniselements 20 bzw. bei einer Reduzierung der dem Formgedächtniselement 20 beaufschlagten Temperatur verlängert sich das Formgedächtniselement wieder und der Hebearm 2 wird wieder nach unten schwenkt, wobei auch der Hubarm 45 von der Drehachse 5 wegeschwenkt wird.

In einer gestrichelten Darstellung ist in Fig. 6 eine alternative Ausgestaltung des Stellmechanismus gezeigt. In dieser Ausgestaltung ist das Stellmittel in dem Grundträger 4 angeordnet. Das Stellmittel ist einerseits mit einer feststehenden Befestigungseinheit 12 und andererseits mit einem Schlitten 40 verbunden, wobei an dem Schlitten das zweite Ende 45b des Hubarms 45 angelenkt ist. Der Schlitten ist in einer in dem Grundträger vorgesehenen Führung entlang der Längsachse des Grundträgers hin und her bewegbar. Durch Beaufschlagung des Formgedächtniselements 20 mit einer Temperatur wird das Stellmittel verkürzt, sodass der Schlitten 40 in Richtung der ersten Befestigungseinheit 12 bzw. in Richtung der Drehachse 5 gezogen wird, sodass der sich aufstellende Hubarm 45 ein Anheben des Hebearms 2 bewirkt. An dem der Drehachse 5 abgewandten Ende ist der Schlitten 40 über ein Rückstellmittel 13, das hier als Rückstellfeder ausgestaltet ist, mit einer zweiten Befestigungseinheit 12b (oder alternativ mit einem Ende der Führung) verbunden. Mit Hilfe der Rückstellfeder 13 wird der Schlitten 40 bei einer Reduzierung der Temperatur, mit der das Formgedächtniselement 20 beaufschlagt wird, oder bei Deaktivierung des Formgedächtniselements 20 wieder von der Drehachse 5 weggezogen, sodass der Hubarm 45 und damit der Hebearm 2 wieder nach unten geschwenkt werden.

Auf den Schlitten 40 kann auch verzichtet werden, wenn das Stellmittel und die Rückstellfeder 13 direkt an dem zweiten Ende 45b des Hubarms 45 befestigt werden. In einer Ausgestaltung kann auch auf die Rückstellfeder verzichtet werden, wenn das Eigengewicht des Hebearms 2 und/oder der an dem Hebearm 2 angeordneten Arbeitsmittel ausreicht, um den Hebearm 2 bei einer Deaktivierung des Formgedächtniselements 20 nach unten zu drücken.

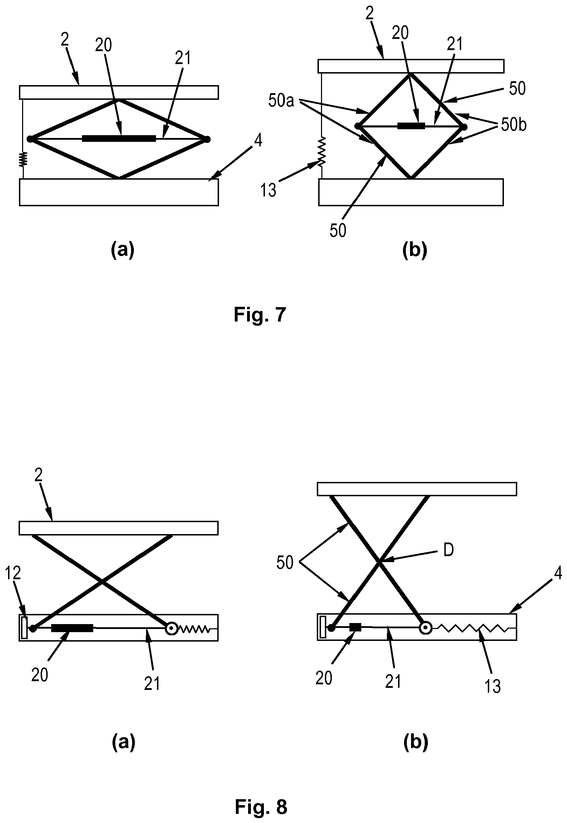

**Fig. 7** zeigt eine weitere erfindungsgemäße Ausgestaltung einer Hebeeinrichtung, wobei in Abbildung (a) die Hebeeinrichtung in einer Neutralstellung und in Abbildung (b) die Hebeeinrichtung mit einem angehobenen Hebearm 2 gezeigt ist. Bei der in Fig. 7 gezeigten Ausgestaltung wird der Hebearm 2 nicht um eine Drehachse nach bzw. nach unten geschwenkt, sondern der gesamte Hebearm 2 wird relativ zum Grundträger angehoben, sodass der Hebearm im Wesentlichen immer parallel zum Grundträger verläuft.

Die Hebeeinrichtung weist hier zwei Scherenarmpaare 50a, 50b auf, die jeweils zwei gelenkig miteinander verbundene Scherenarme 50 aufweisen. Die beiden Scherenarmpaare 50a, 50b sind jeweils einerseits gelenkig mit dem Hebearm 2 und andererseits gelenkig mit dem Grundträger 4 verbunden.

Zwischen den beiden Scherenarmpaare 50a, 50b ist das Stellmittel angeordnet, das einerseits mit dem ersten Scherenarmpaar 50a und andererseits mit dem zweiten Scherenarmpaar 50b gekoppelt ist. Durch Aktivieren des Formgedächtniselements 20 des Stellmittels wird die Länge des Stellmittels reduziert, sodass sich der Abstand zwischen den Gelenken der beiden Scherenarmpaare 50a, 50b ebenfalls reduziert. Weil die beiden Scherenarmpaare 50a, 50b an dem Hebearm 2 und an dem Grundträger 4 angelenkt sind, vergrößert sich der Winkel zwischen den Scherenarmen 50 der Scherenarmpaare 50a, 50b, sodass der Hebearm 2 angehoben wird.

Bei einer Deaktivierung des Formgedächtniselements 20 verringert sich der Winkel zwischen den Scherenarmen 50 der Scherenarmpaare 50a, 50b wieder, sodass der Hebearm 2 wieder abgesenkt wird. Das Eigengewicht des Hebearms 2 sollte ausreichend sein, um diese Winkel bei einer Deaktivierung des Formgedächtniselements zu verkleinern. Sollte das Eigengewicht nicht ausreichend sein, kann zwischen dem Hebearm 2 und dem Grundträger eine Rückstellfeder 13 vorgesehen sein, die den Hebearm nach unten zieht.

Die in Fig. 7 gezeigte Anordnung der Scherenarme 50 und des Stellmittels kann bei der in Fig. 6 gezeigten Ausgestaltung einer Hebeeinrichtung anstelle des dort gezeigten Hubarms 45 verwendet werden, wobei diese Anordnung dann an dem Hebearm und an dem Grundträger angelenkt ist. Bei einer Aktivierung des Formgedächtniselements 20 wird der Hebearm 2 dann nach oben geschwenkt und die Scherenarmeanordnung nach links, d.h. in Richtung Drehachse 5 geneigt.

**Fig. 8** zeigt eine weitere erfindungsgemäße Ausgestaltung einer Hebeeinrichtung, wobei in Abbildung (a) die Hebeeinrichtung in einer Neutralstellung und in Abbildung (b) die Hebeeinrichtung mit einem angehobenen Hebearm 2 gezeigt ist. Bei der in Fig. 8 gezeigten Ausgestaltung wird der Hebearm 2 nicht um eine Drehachse nach bzw. nach unten geschwenkt, sondern der gesamte Hebearm 2 wird relativ zum Grundträger angehoben, sodass der Hebearm im Wesentlichen immer parallel zum Grundträger verläuft.

Die Hebeeinrichtung weist hier zwei Scherenarme 50 auf, die sich in einem Drehpunkt D kreuzen und in diesem Drehpunkt D um eine Achse drehbar miteinander verbunden sind. Zwischen den beiden unterhalb des Drehpunktes D verlaufenden Scherenarmen 50 ist ein Stellmittel angeordnet, das einerseits mit dem linken Scherenarm und andererseits mit dem rechten Scherenarm gekoppelt ist, und zwar jeweils unterhalb des Drehpunktes D. Alternativ kann das Stellmittel in entsprechender Weise auch oberhalb des Drehpunktes D angeordnet werden.

Der eine Scherenarm ist schwenkbar an dem Grundträger 4 angelenkt und in Längsrichtung zum Hebearm 2 bewegbar an dem Hebearm 2 angeordnet. Der andere Scherenarm ist schwenkbar an dem Hebearm 2 angelenkt und in Längsrichtung zum Grundträger 4 bewegbar an dem Grundträger 4 angeordnet. An den in Längsrichtung bewegbaren Enden der Scherenarme können Rollen angeordnet sein, die einer in dem Hebearm 2 bzw. in dem Grundträger 4 vorgesehenen Führung verlaufen.

Bei einer Beaufschlagung des Formgedächtniselements 20 des Stellmittels mit einer Temperatur wird die Gesamtlänge des Stellmittels verkürzt, sodass der Abstand der beiden unteren Enden der Scherenarme 50 reduziert wird und wegen der Verbindung der beiden Scherenarme in dem Drehpunkt D die Gesamthöhe der Scherenarmanordnung vergrößert wird, was zu einer Anhebung des Hebearms führt.

Ferner können an einem oder an beiden in Längsrichtung bewegbaren Enden der Scherenarme Rückstellmittel, z.B. Rückstellfedern 13 vorgesehen sein, dessen Rückstellkraft entgegen der Stellkraft des Stellmittels wirkt, um bei einer Deaktivierung des Formgedächtniselements 20 die beiden unteren bzw. oberen Enden der Scherenarme wieder auseinander zu ziehen und so den Hebearm abzusenken. Bei einem ausreichend großen Eigengewicht des Hebearms 2 kann auf die Rückstellfedern 13 auch verzichtet werden.

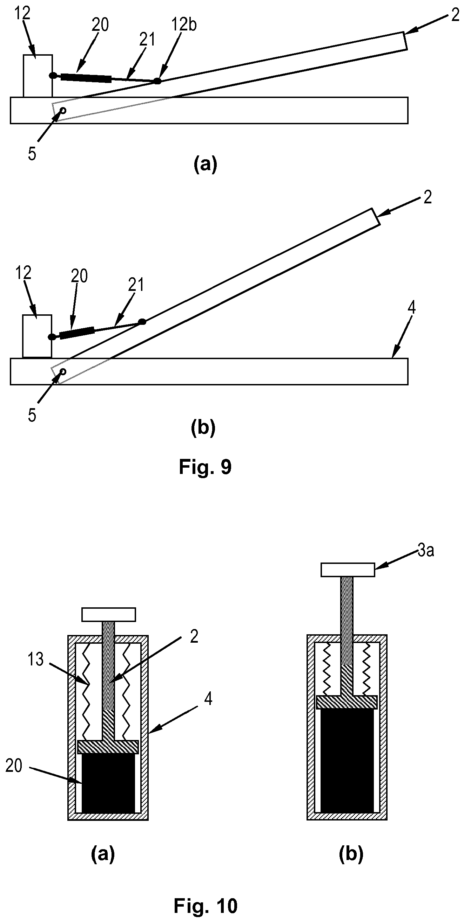

**Fig. 9** zeigt eine noch weitere erfindungsgemäße Ausgestaltung einer Hebeeinrichtung, wobei in Abbildung (a) die Hebeeinrichtung in einer Neutralstellung und in Abbildung (b) die Hebeeinrichtung mit einem angehobenen bzw. nach oben geschwenkten Hebearm 2 gezeigt ist.

Der Hebearm 2 ist hier wiederum an einer Drehachse 5 schwenkbar an einem Grundträger 4 angelenkt. An dem Grundträger 4 ist eine erste Befestigungseinheit 12 angeordnet, die auch Bestandteil des Grundträgers 4 sein kann. An der ersten Befestigungseinheit 12 ist das eine Ende des Stellmittels angelenkt. Das andere Ende des Stellmittels ist über eine zweite Befestigungseinheit 12b an dem Hebearm 2 angelenkt. Durch Beaufschlagung des Formgedächtniselements 20 des Stellmittels mit einer Temperatur wird die Gesamtlänge des Stellmittels reduziert, sodass der Hebearm von dem Stellmittel nach oben gezogen bzw. nach oben geschwenkt wird. Rückstellmittel, etwa Rückstellfedern müssen nur vorgesehen werden, wenn das Eigengewicht des Hebearms 2 nicht ausreicht, um nach einer Deaktivierung des Formgedächtniselements 20 selbstständig in die Neutralstellung zurückzukehren.

**Fig. 10** zeigt eine noch weitere erfindungsgemäße Ausgestaltung einer Hebeeinrichtung, wobei in Abbildung (a) die Hebeeinrichtung in einer Neutralstellung und in Abbildung (b) die Hebeeinrichtung mit einem ausgefahrenen Hebearm 2 gezeigt ist.

Die in Fig. 10 gezeigte Hebeeinrichtung ähnelt einem Pneumatik- bzw. Hydraulikzylinder. Der Grundträger 4 wird durch ein zylinderförmiges (z.B. kreiszylinderförmiges) Gehäuse gebildet, in dem eine als Kolbenstange ausgestaltete Hebeeinheit 2 angeordnet ist. Die Kolbenstange 2 ist mit einem Ende aus dem Grundträger 4 herausgeführt.

Das außenliegende Ende der Kolbenstange 2 kann vorgesehen sein, um dort Arbeitsmittel oder Arbeitsmittelträger bzw. Befestigungseinrichtungen 3a anzuordnen oder zu befestigen.

Im Inneren des Gehäuses 4 ist Stellmittel 20 angeordnet, das hier aus einem Formgedächtnismaterial besteht. Das Stellmittel 20 ist zwischen dem Boden des Gehäuses 4 und dem innenliegenden Ende der Kolbenstange 2 angeordnet, sodass das Stellmittel 20 auf die Kolbenstange 2 wirken kann. Vorzugsweise ist das Stellmittel am Boden des Gehäuses befestigt.

Bei Beaufschlagung des Stellmittels 20 mit einer Temperatur vergrößert sich die Länge des Stellmittels 20, sodass das innenliegende Ende der Kolbenstange 2 mit einer Schubkraft beaufschlagt wird. Die Schubkraft bewirkt ein Bewegen der Kolbenstange 2 relativ zum Gehäuse 4, sodass die Kolbenstange 2 aus dem Gehäuse heraus bewegt wird, wie in Abbildung (b) gezeigt.

Wird das Stellmittel 20 mit keiner Temperatur mehr beaufschlagt, kehrt das Stellmittel 20 in seine ursprüngliche Form zurück bzw. nimmt seine ursprüngliche Länge ein, wie in Abbildung (a) gezeigt. Das Eigengewicht der Kolbenstange 2 bewirkt dann, dass die Kolbenstange 2 wieder in das Gehäuse hinein bewegt wird und die Hebeeinrichtung wieder in die Neutralstellung zurückkehrt.

Für den Fall, dass das Eigengewicht der Kolbenstange nicht ausreicht, damit sie selbstständig in die Neutralstellung zurückkehrt, können der Kolbenstange Rückstellmittel 13 zugeordnet werden, die entgegen der Stellkraft des Stellmittels 20 wirken. Bei der in Fig. 10 gezeigten Ausführungsform sind im Inneren des Gehäuses 4 als Druckfedern ausgestaltete Rückstellmittel angeordnet.

Die in Fig. 10 gezeigte Ausgestaltung einer Hebeeinrichtung hat gegenüber einem Pneumatik- bzw. Hydraulikzylinder den Vorteil, dass keine unter Druck stehende Flüssigkeit oder Gas dem Gehäuse 4 zugeführt werden muss. Es muss lediglich ein Stromkabel zugeführt werden, um das Formgedächtnismaterial der Kolbenstange 2 mit Strom zu beaufschlagen, damit sich diese entsprechend erwärmen kann. Der konstruktive Aufwand der Hebeeinrichtung wird so im Vergleich zu Pneumatik- bzw. Hydraulikzylinder erheblich reduziert. Gleichzeitig kann die erfindungsgemäße Hebeeinrichtung besonders kompakt ausgeführt werden. Hinzukommt, dass die in Fig. 10 gezeigte Hebeeinrichtung besonders flexibel einsetzbar ist - es muss lediglich eine entsprechende Stromzufuhr bereitgestellt werden, was erheblich unproblematischer ist, als das Bereitstellen entsprechende Druckleitung für Druckluft bzw. Hydrauliköl.

Bei sämtlichen vorstehend beschriebenen erfindungsgemäßen Hebeeinrichtungen ist es vorgesehen, dass bei einer Unterbrechung der Stromversorgung für die Beaufschlagung der Formgedächtniselemente 20 mit einer Temperatur, die Hebeeinrichtungen selbständig in die jeweilige Neutralstellung zurückkehren. Hierzu kann es vorteilhaft sein, auch dann entsprechende Rückstellmittel 13, etwa Rückstellfedern vorzusehen, wenn das Eigengewicht des Hebearms 2 und/oder der an dem Hebearm angeordneten Arbeitsmittel ausreichen würde, um den Hebearm in seine Neutralstellung abzusenken bzw. nach unten zu schwenken.

Die Hebeeinheit bzw. der Hebearm 2 kann auch eine Führungsvorrichtung, etwa ein Führungsrohr oder ein Halbrohr umfassen, in das ein Spülschlauch mit einem daran angeschlossenen Spülkopf aufgenommen ist. Zu Einbringen des Spülkopfes in ein Nebenrohr wird die Führungsvorrichtung angehoben bzw. nach oben geschwenkt und anschließend kann der Spülkopf in das Nebenrohr eingeschoben werden. Zum Anheben der Führungsvorrichtung kann ein erfindungsgemäßes Stellmittel verwendet werden, wie mit Bezug auf Fig. 3 bis Fig. 10 beschrieben.

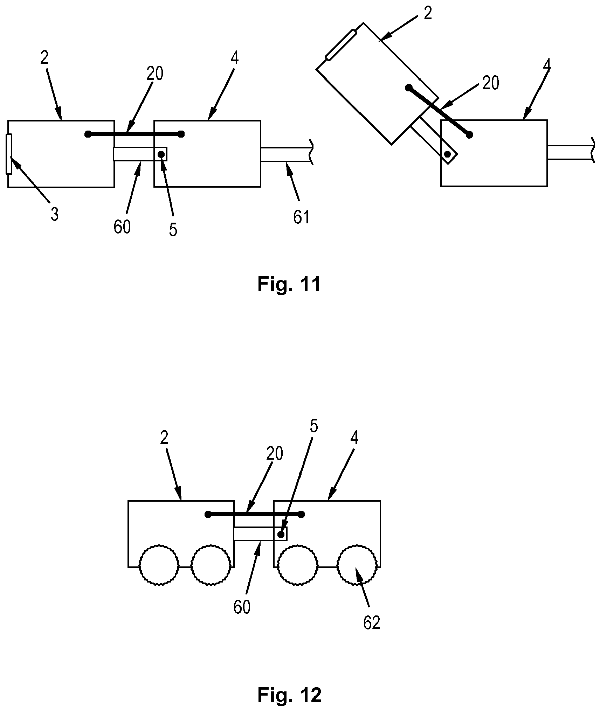

**Fig. 11** zeigt ein als Schiebesystem ausgestaltetes Inspektionssystem, bei dem eine erfindungsgemäße Hebeeinrichtung verwendet wird, wobei die linke Abbildung das Inspektionssystem in einer Neutralstellung und die rechte Abbildung das Inspektionssystem in einer ausgelenkte bzw. angehobenen Stellung zeigen.

An einem Schiebeaal 61 ist der Grundträger 4 der Hebeeinrichtung angeordnet. Über eine Gelenkstange 60 ist die Hebeeinheit 2 schwenkbar an dem Grundträger 4 angelenkt. Die Drehachse 5 der Gelenkstange 60 befindet sich hier an dem Grundträger 4, während die Gelenkstange 60 fest mit der Hebeeinheit 2 verbunden ist. In einer anderen Ausführungsform kann sich der Drehpunkt 5 der Gelenkstange 60 auch an der Hebeeinheit 2 befinden und die Gelenkstange kann fest mit dem Grundträger 4 verbunden sein. Das erfindungsgemäße Wirkprinzip ändert sich hierdurch nicht. In einer noch weiteren Ausgestaltung kann die Gelenkstange 60 sowohl an dem Grundträger 4 als auch an der Hebeeinheit 2 schwenkbar angelenkt sein.

Das Stellmittel 20, das in dem hier gezeigten Beispiel vollständig aus einem Formgedächtnismaterial besteht, ist einerseits an der Hebeeinheit 2 und andererseits an dem Grundträger 4 befestigt. Das Stellmittel ist hier als Formgedächtnisdraht ausgebildet. An dem vorderen Ende der Hebeeinheit 2 ist eine Kameraeinrichtung 3 angeordnet.

Durch Beaufschlagen des Formgedächtnisdrahtes 20 mit einer Temperatur verkürzt sich der Formgedächtnisdraht, sodass die Hebeeinheit 2 mit einer Zugkraft beaufschlagt wird, die ein Verschwenken der Hebeeinheit 2 relativ zum Grundträger 4 um die Drehachse 5 bewirkt, sodass die Hebeeinheit 2 angehoben wird.

Wird der Formgedächtnisdraht 20 nicht mehr mit einer Temperatur beaufschlagt, verlängert er sich wieder und nimmt wieder seine ursprüngliche Länge ein, sodass sich die Hebeeinheit 2 wieder absenkt.

**Fig. 12** zeigt einen Fahrwagen eines Inspektionssystems, wobei der Fahrwagen die erfindungsgemäße Hebeeinrichtung aufweist.

Ein hinterer Teil des Fahrwagens bildet den Grundträger 4. Ein vorderer Teil des Fahrwagens bildet die Hebeeinheit 2. Sowohl hintere als auch der vordere Teil des Fahrwagens weist hier Fahrwagenräder 62 auf.

Der Grundträger 4 und die Hebeeinheit 2 sind über eine Gelenkstange 60 miteinander verbunden, wobei die Gelenkstange 60 hier schwenkbar an dem Grundträger 4 angelenkt ist. Die Anordnung entspricht hierbei der in Fig. 11 gezeigten Anordnung.

Wie bei der in Fig. 11 gezeigten Ausgestaltung sind auch bei der in Fig. 12 gezeigten Ausgestaltung der Grundträger 4 und die Hebeeinheit 2 mit einem Formgedächtnisdraht miteinander verbunden, wobei der Formgedächtnisdraht fest mit dem Grundträger 4 und mit der Hebeeinheit 2 verbunden ist. Die Funktionsweise des Formgedächtnisdrahtes entspricht der mit Bezug auf Fig. 11 beschriebenen Funktionsweise. Durch Verkürzen des Formgedächtnisdrahtes 20, was durch Beaufschlagen des Formgedächtnisdrahtes mit einer Temperatur bewerkstelligt wird, wird die Hebeeinheit 2, also der vordere Teil des Fahrwagens angehoben bzw. nach oben verschwenkt.

Die mit Bezug auf Fig. 11 und Fig. 12 gezeigten Hebeeinheiten 2 eignen sich insbesondere dazu, ein Inspektionssystem so auszugestalten, dass auf einfache Weise ein Abbiegen des Inspektionssystems von einem Hauptkanal in einen Nebenkanal bewerkstelligbar ist.

### Bezugszeichen:

- 1: Hebeeinrichtung
- 2: Hebeeinheit der Hebeeinrichtung 1 (z.B. Hebearm)
- 3: Kameraeinrichtung oder Spülkopf oder sonstiges Werkzeug
- 3a: Befestigungseinrichtung für Kameraeinrichtung 3
- 4: Grundträger der Hebeeinrichtung 1
- 5: Achsen der Hebeeinheit 2 und 6 (z.B. Hebearmachsen)
- 6: vordere Hebeeinheit (z.B. vorderer Hebearm)
- 7: Teleskoparm
- 8: Fahrwagen
- 10: Inspektionssystem
- 12: erste Befestigungseinheit
- 12b: zweite Befestigungseinheit
- 13: Rückstellmittel, z.B. Rückstellfeder
- 15: Platine der Steuer- und/oder Regeleinrichtung 30
- 16: Steuer- und oder Datenkabel
- 20: Formgedächtniselement
- 21: Zugelement
- 23: Umlenkeinrichtung (z.B. Umlenkrolle)
- 30: Steuer- und/oder Regeleinrichtung
- 40: Schlitten
- 45: Hubarm
- 45a: erstes Ende des Hubarms 45
- 45b: zweites Ende des Hubarms 45
- 50: Scherenarme
- 50a: erstes Scherenarmpaar
- 50b: zweites Scherenarmpaar
- 60: Gelenkstange
- 61: Schiebeaal
- 62: Fahrwagenräder
- D: Drehpunkt zweier sich kreuzender Scherenarme 50
- L: Längsrichtung (Bewegungsrichtung des Hubarms 45 relativ zum Grundträger 4)

## Patentansprüche

1. Hebeeinrichtung (1) für ein Inspektionssystem (10) und/oder Reinigungssystem, insbesondere zum Anheben einer Kameraeinrichtung (3) oder einer Spüleinrichtung, mit einem Grundträger (4) und einer relativ zum Grundträger (4) bewegbaren Hebeeinheit (2), wobei die Hebeeinrichtung (1) mindestens ein mit der Hebeeinheit (2) zusammenwirkendes Stellmittel zum Bewegen der Hebeeinheit (2) aufweist,
**dadurch gekennzeichnet, dass**
- das Stellmittel zumindest ein Formgedächtniselement (20) aufweist, welches in Abhängigkeit von zumindest einer Einflussgröße seine Form reversibel ändert, wobei
- die Formänderung des Formgedächtniselements (20) das Bewegen der Hebeeinheit (2) relativ zum Grundträger (4) bewirkt.

2. Hebeeinrichtung nach dem vorhergehenden Anspruch, wobei das Formgedächtniselement (20) des Stellmittels
- einerseits direkt oder indirekt mit der Hebeeinheit (2) gekoppelt ist und
- andererseits direkt oder indirekt mit dem Grundträger (4) gekoppelt ist, wobei das Formgedächtniselement (20) vorzugsweise ein längliches Formgedächtniselement, insbesondere Formgedächtnisdraht, umfasst, das in Abhängigkeit von der Einflussgröße seine Länge ändert, vorzugsweise verringert.

3. Hebeeinrichtung nach einem der vorhergehenden Ansprüche, wobei das Stellmittel zusätzlich zumindest ein Zugelement (21) aufweist, welches
- einerseits direkt oder indirekt mit dem Formgedächtniselement (20) und
- andererseits direkt oder indirekt mit der Hebeeinheit (2) oder mit dem Grundträger (4)
verbunden ist.

4. Hebeeinrichtung nach einem der vorhergehenden Ansprüche, wobei die Einflussgröße die Temperatur des Formgedächtniselements (20) ist und wobei die für ein vorbestimmtes Bewegen der Hebeeinheit (2) relativ zum Grundträger (4) benötigte Temperatur dem Formgedächtniselement (20) direkt oder indirekt beaufschlagbar ist, wobei das Formgedächtniselement (20) mit einer Steuer- und/oder Regeleinrichtung (30) gekoppelt ist, die angepasst ist, das Formgedächtniselement (20) mit der für ein vorbestimmtes Bewegen der Hebeeinheit (2) relativ zum Grundträger (4) benötigten Temperatur zu beaufschlagen, wobei die Steuer- und/oder Regeleinrichtung (30) vorzugsweise angepasst ist, elektrischen Strom in das Formgedächtniselement (20) einzuspeisen, um es dadurch zu erwärmen.

5. Hebeeinrichtung nach einem der vorhergehenden Ansprüche, wobei diese mindestens ein mit der Hebeeinheit (2) zusammenwirkendes Rückstellmittel (13) aufweist, wobei eine Rückstellkraft des Rückstellmittels (13) entgegen einer Stellkraft des Stellmittels wirkt.

6. Hebeeinrichtung nach dem vorhergehenden Anspruch, wobei das Rückstellmittel (13) zumindest ein Federelement umfasst.

7. Hebeeinrichtung nach einem der vorhergehenden Ansprüche, wobei die Hebeeinheit (2) um eine Schwenkachse (5) relativ zum Grundträger (4) schwenkbar ist, wobei das Stellmittel
- einerseits an einer dem Grundträger (4) zugeordneten ersten Befestigungseinheit (12) und
- andererseits an einer der Hebeeinheit (2) zugeordneten zweiten Befestigungseinheit (12b)
befestigt ist, wobei an der ersten Befestigungseinheit (12) oder an der zweiten Befestigungseinheit (12b) vorzugsweise eine Platine (15) angeordnet ist, die die Steuer- und/oder Regeleinrichtung (30) aufweist.

8. Hebeeinrichtung nach dem vorhergehenden Anspruch, wobei das Stellmittel von der ersten Befestigungseinheit (12) über eine Umlenkstelle (23) zu der zweiten Befestigungseinheit (12b) geführt ist, wobei das Stellmittel an der Umlenkstelle (23) umgelenkt ist, wobei die Umlenkstelle (23) vorzugsweise eine Umlenkeinrichtung, insbesondere eine Umlenkrolle umfasst.

9. Hebeeinrichtung nach einem der Ansprüche 1 bis 7, wobei die Hebeeinheit (2) um eine Schwenkachse (5) relativ zum Grundträger (4) schwenkbar ist, wobei die Hebeeinrichtung einen Hubarm (45) aufweist, der
- mit einem ersten Ende (45a) an der Hebeeinheit (2) angelenkt ist und
- mit einem zweiten Ende (45b) in Längsrichtung (L) zum Grundträger (4) bewegbar an dem Grundträger (4) angeordnet ist,
wobei das Stellmittel einerseits mit der Hebeeinheit (2) und andererseits mit dem Hubarm (45) gekoppelt ist, wobei die Formänderung des Formgedächtniselements (20) bewirkt, dass das zweite Ende (45b) des Hubarms (45) in Richtung zur Schwenkachse (5) bewegt wird und dadurch einen Winkel zwischen der Hebeeinheit (2) und dem Grundträger (4) vergrößert.

10. Hebeeinrichtung nach dem vorhergehenden Anspruch, wobei dem zweiten Ende (45b) des Hubarms (45) ein Schlitten (40) zugeordnet ist, an dem das zweite Ende (45b) des Hubarms (45) angelenkt ist, wobei der Schlitten (40) in Längsrichtung (L) zum Grundträger (4) bewegbar ist und wobei das Stellmittel mit dem Schlitten (40) gekoppelt ist.

11. Hebeeinrichtung nach einem der Ansprüche 1 bis 7,
wobei diese ein erstes Scherenarmpaar (50a) und ein zweites Scherenarmpaar (50b) aufweist, die jeweils
- zwei gelenkig miteinander verbundene Scherenarme (50) aufweisen, und
- einerseits an den Grundträger (4) und andererseits an der Hebeeinheit (2) angelenkt sind,
wobei zwischen den beiden Scherenarmpaaren (50a; 50b) das Stellmittel angeordnet ist, das einerseits mit dem ersten Scherenarmpaar (50a) und andererseits mit den zweiten Scherenarmpaar (50b) gekoppelt ist,
oder
wobei diese zwei Scherenarme (50) aufweist, die sich in einem Drehpunkt (D) kreuzen und in diesem Drehpunkt um eine Achse drehbar miteinander verbunden sind, wobei zwischen
- den beiden Abschnitten der Scherenarme (50) oberhalb des Drehpunktes (D) und/oder
- den beiden Abschnitten der Scherenarme (50) unterhalb des Drehpunktes (D)
das Stellmittel angeordnet ist und beiderseits unterhalb bzw. oberhalb des Drehpunktes (D) mit den jeweiligen Abschnitten der Scherenarme (50) gekoppelt ist.

12. Inspektionssystem (10) und/oder Reinigungssystem, insbesondere Kanalinspektions- und/oder Reinigungssystem, aufweisend zumindest eine Hebeeinrichtung (1) nach einem der vorhergehenden Ansprüche.

13. Inspektionssystem und/oder Reinigungssystem nach dem vorhergehenden Anspruch, wobei die Hebeeinrichtung (1) lösbar an einem Fahrwagen (8) des Inspektionssystems und/oder Reinigungssystems angeordnet ist.

14. Inspektionssystem und/oder Reinigungssystem nach einem der beiden vorhergehenden Ansprüche, wobei dieses über eine Kommunikationsverbindung mit einer Kontrolleinrichtung gekoppelt ist, um von der Kontrolleinrichtung Steuersignale zu empfangen, die angeben, um welche Höhe die Hebeeinheit (2) anzuheben ist, wobei die Kommunikationsverbindung vorzugsweise drahtlos ausgebildet ist.

15. Inspektionssystem und/oder Reinigungssystem nach einem der vorhergehenden Ansprüche 12 bis 14, wobei an der Hebeeinheit (2) Arbeitsmittel angeordnet sind, wobei die Arbeitsmittel eine Bildaufnahmeeinrichtung, eine Satellitenkamera, eine Spüleinrichtung, insbesondere Spülkopf, ein Greifwerkzeug, ein Fräswerkzeug, oder Kombinationen hiervon umfassen.

## Claims

1. A lifting device (1) for an inspection system (10) and/or a cleaning system, in particular for lifting a camera device (3) or a flushing device, the lifting device having a base support (4) and a lifting unit (2) movable with respect to the base support (4), said lifting device (1) having at least one setting means cooperating with the lifting unit (2) for moving said lifting unit (2),
**characterised in that**
- the setting means has at least one shape memory element (20) capable of reversibly changing its shape depending on at least one influence factor,
- the change in the shape of the shape memory element (20) causes the lifting unit (2) to be moved with respect to the base support (4).

2. The lifting device as claimed in the preceding claim, wherein the shape memory element (20) of the setting means
- on the one hand is directly or indirectly coupled to the lifting unit (2) and
- on the other hand is directly or indirectly coupled to the base support (4),
said shape memory element (20) preferably comprising an elongate shape memory element, in particular a shape memory wire, the length of which is changed, preferably reduced, depending on said influence factor.

3. The lifting device as claimed in any of the preceding claims, wherein the setting means additionally comprises a traction means (21) which
- on the one hand is directly or indirectly connected to the shape memory element (20), and
- on the other hand is directly or indirectly connected to the lifting unit (2) or to the base support (4).

4. The lifting device as claimed in any of the preceding claims, wherein the influence factor is the temperature of the shape memory element (20) and wherein the temperature which is required for the lifting unit (2) to be moved a predetermined distance with respect to the base support (4) may be applied directly or indirectly to the shape memory element (20), said shape memory element (20) being coupled to a control and/or regulating device (30) adapted to apply the temperature to the shape memory element (20) which is required for moving the lifting unit (2) a predetermined distance with respect to the base support (4), said control and/or regulating device (30) being preferably adapted to introduce electric current into the shape memory element (20), thus heating it up.

5. The lifting device as claimed in any of the preceding claims, wherein said device has at least one restoring means (13) cooperating with the lifting unit (2), the setting force of setting means being counteracted by a restoring force of the restoring means (13).

6. The lifting device as claimed in the preceding claim, wherein the restoring means (13) comprises at least one spring element.

7. The lifting device as claimed in any of the preceding claims, wherein the lifting unit (2) may be pivoted with respect to the base support (4) about a pivot axis (5), said setting means being fastened
- on the one hand on a first fastening unit (12) associated with the base support (4), and
- on the other hand on a second fastening unit (12b) associated with the lifting unit (2),
the first fastening unit (12) and the second fastening unit (12b) preferably having a circuit board (15) applied thereon accommodating the control and/or regulating device (30).

8. The lifting device as claimed in the preceding claim, wherein the setting means is passed from the first fastening unit (12) to the second fastening unit (12b) via a first deflection point (23), the setting means being deflected at the deflection point (23), said deflection point (23) preferably comprising a deflection device, in particular a deflection pulley.

9. The lifting device as claimed in any one of claims 1 to 7, wherein the lifting unit (2) may be pivoted with respect to the base support (4) about a pivot axis (5), said lifting device having a lifting arm (45) which
- has a first end (45a) hingedly connected to the lifting unit (2) and
- has a second end (45b) arranged on the base support (4) in such a manner as to be movable in a longitudinal direction (L) with respect to the base support (4),
said setting means being coupled to the lifting unit (2), on the one hand, and to the lifting arm (45), on the other, the changing shape of the shape memory element (20) causing the second end (45b) of the lifting arm (45) to be moved in the direction of the pivot axis (5), thus increasing an angle formed between the lifting unit (2) and the base support (4).

10. The lifting device as claimed in the preceding claim, wherein the second end (45b) of the lifting arm (45) has a carriage (40) associated therewith to which the second end (45b) of the lifting arm (45) is hingedly connected, said carriage (40) being movable in a longitudinal direction (L) with respect to the base support (4) and said setting means being coupled to the carriage (40).

11. The lifting device as claimed in any one of claims 1 to 7,
wherein said lifting device has a first pair of pantograph arms (50a) and a second pair of pantograph arms (50b),
- which have each two pantograph arms (50) hingedly connected to each other, and
- which are hingedly connected to the base support (4), on the one hand, and to the lifting unit (2) on the other,
said two pairs of pantograph arms (50a; 50b) having the setting means arranged therebetween which is coupled to the first pair of pantograph arms (50a), on the one hand, and to the second pair of pantograph arm (50b), on the other,
or
wherein said lifting device has two pantograph arms (50) which form an intersection at a rotation point (D) and which are rotatably connected to each other at this rotation point, the setting means being arranged between
- the two portions of the pantograph arms (50) located above the rotation point (D) and/or
- the two portions of the pantograph arms (50) located below the rotation point (D)
and being coupled, on both sides, to the respective portions of the pantograph arms (50) located respectively below or above the rotation point (D).

12. An inspection system (10) and/or cleaning system, in particular a sewer inspection and/or sewer cleaning system, having at least one lifting device (1) as claimed in any of the preceding claims.

13. The inspection system and/or cleaning system as claimed in the preceding claim, wherein the lifting device (1) is detachably arranged on a crawler (8) of the inspection system and/or cleaning system.

14. The inspection system and/or cleaning system as claimed in any one of the two preceding claims, wherein said system is coupled to a control device via a communication connection in order to receive control signals from said control device indicating the height by which the lifting unit (2) is to be lifted, said communication connection being preferably realised in a wireless manner.

15. The inspection system and/or cleaning system as claimed in any one of the preceding claims 12 to 14, wherein the lifting unit (2) has working means arranged thereon, said working means comprising an image acquisition device, a satellite camera, a flushing device, in particular a flushing head, a gripping tool, a milling tool or combinations thereof.

## Revendications

1. Dispositif élévateur (1) pour un système d'inspection (10) et/ou un système de nettoyage, en particulier en vue d'élever un dispositif caméra (3) ou un dispositif de rinçage, avec un support de base (4) et avec une unité élévatrice (2) qui peut être déplacée par rapport audit support de base (4), le dispositif élévateur (1) présentant au moins un moyen de réglage qui agit en coopération avec l'unité élévatrice (2) afin de déplacer ladite unité élévatrice (2),
**caractérisé en ce que**
- le moyen de réglage présente au moins un élément à mémoire de forme (20) qui change sa forme de manière réversible en fonction d'au moins un facteur déterminant,
- le changement de forme de l'élément à mémoire de forme (20) provoque le déplacement de l'unité élévatrice (2) par rapport au support de base (4).

2. Dispositif élévateur selon la revendication précédente, dans lequel l'élément à mémoire de forme (20) du moyen de réglage est couplé,
- d'une part, directement ou indirectement à l'unité élévatrice (2) et,
- d'autre part, directement ou indirectement au support de base (4), l'élément à mémoire de forme (20) comprenant de préférence un élément à mémoire de forme allongé, en particulier un fil à mémoire de forme, qui change, de préférence réduit, sa longueur en fonction du facteur déterminant.

3. Dispositif élévateur selon l'une quelconque des revendications précédentes, dans lequel le moyen de réglage présente en outre au moins un élément de traction (21) qui est relié,
- d'une part, directement ou indirectement à l'élément à mémoire de forme (20) et,
- d'autre part, directement ou indirectement à l'unité élévatrice (2) ou au support de base (4)

4. Dispositif élévateur selon l'une quelconque des revendications précédentes, dans lequel le facteur déterminant est la température de l'élément à mémoire de forme (20), et dans lequel la température nécessaire à un déplacement prédéterminé de l'unité élévatrice (2) par rapport au support de base (4) peut être appliquée directement ou indirectement à l'élément à mémoire de forme (20), l'élément à mémoire de forme (20) étant couplé à un dispositif de commande et/ou de régulation (30) qui est conçu pour appliquer audit élément à mémoire de forme (20) la température nécessaire pour provoquer un mouvement prédéterminé de l'unité élévatrice (2) par rapport au support de base (4), le dispositif de commande et/ou de régulation (30) étant conçu de préférence pour introduire du courant électrique dans l'élément à mémoire de forme (20) en vue de le réchauffer.

5. Dispositif élévateur selon l'une quelconque des revendications précédentes, dans lequel ledit dispositif présente au moins un moyen de rappel (13) qui agit en coopération avec l'unité élévatrice (2), une force de rappel du moyen de rappel (13) agissant contre une force de réglage du moyen de réglage.

6. Dispositif élévateur selon la revendication précédente, dans lequel le moyen de rappel (13) comprend au moins un élément élastique.

7. Dispositif élévateur selon l'une quelconque des revendications précédentes, dans lequel l'unité élévatrice (2) peut pivoter autour d'un axe de pivotement (5) par rapport au support de base (4), le moyen de réglage étant fixé,
- d'une part, à une première unité de fixation (12) affectée au support de base (4) et,
- d'autre part, à une deuxième unité de fixation (12b) affectée à l'unité élévatrice (2),
sur ladite première unité de fixation (12) ou sur ladite deuxième unité de fixation (12b) étant disposée de préférence une platine (15), laquelle présente le dispositif de commande et/ou de régulation (30).

8. Dispositif élévateur selon la revendication précédente, dans lequel le moyen de réglage passe de la première unité de fixation (12) à la deuxième unité de fixation (12b) par le biais d'un point de déviation (23), le moyen de réglage étant dévié au niveau dudit point de déviation (23), le point de déviation (23) comprenant de préférence un dispositif de déviation, en particulier une poulie de renvoi.

9. Dispositif élévateur selon l'une quelconque des revendications 1 à 7, dans lequel l'unité élévatrice (2) peut pivoter autour d'un axe de pivotement (5) par rapport au support de base (4), le dispositif élévateur présentant un bras élévateur (45) lequel
- est articulé, avec une première extrémité (45a), à l'unité élévatrice (2) et
- est disposé, avec une deuxième extrémité (45b), sur le support de base (4) de manière à pouvoir se déplacer en sens longitudinal (L) par rapport audit support de base (4),
dans lequel le moyen de réglage est couplé, d'une part, à l'unité élévatrice (2) et, d'autre part, au bras élévateur (45), dans lequel le changement de forme de l'élément à mémoire de forme (20) fait en sorte que la deuxième extrémité (45b) du bras élévateur (45) est déplacée en direction de l'axe de pivotement (5), ce qui agrandit un angle entre l'unité élévatrice (2) et le support de base (4).

10. Dispositif élévateur selon la revendication précédente, dans lequel à la deuxième extrémité (45b) du bras élévateur (45) est affecté un chariot (40) sur lequel est articulée la deuxième extrémité (45b) du bras élévateur (45), le chariot (40) pouvant être déplacé en sens longitudinal (L) par rapport au support de base (4) et le moyen de réglage étant couplé au chariot (40).

11. Dispositif élévateur selon l'une quelconque des revendications 1 à 7, dans lequel ledit dispositif présente une première paire de branches de pantographe (50a) et une deuxième paire de branches de pantographe (50b), lesquelles
- présentent respectivement deux branches de pantographe (50) reliées entre elles de manière articulée et
- sont articulées, d'une part, au support de base (4) et, d'autre part, à l'unité élévatrice (2),
dans lequel entre les deux paires de branches de pantographe (50a ; 50b) est disposé le moyen de réglage qui est couplé, d'une part, à la première paire de branches de pantographe (50a) et, d'autre part, à la deuxième paire de branches de pantographe (50b),
ou
dans lequel ledit dispositif présente deux branches de pantographe (50) qui se croisent en un point de rotation (D) et qui sont reliées entre elles de manière à tourner autour d'un axe en ce point de rotation, entre
- lesdites deux parties des branches de pantographe (50) situées au-dessus du point de rotation (D) et/ou
- lesdites deux parties des branches de pantographe (50) situées au-dessous du point de rotation (D)
étant disposé le moyen de réglage et ledit moyen de réglage étant couplé des deux côtés, au-dessous ou au-dessus du point de rotation (D), aux parties respectives des branches de pantographe (50).

12. Système d'inspection (10) et/ou système de nettoyage, en particulier système d'inspection et de nettoyage de canalisation, lequel comprend au moins un dispositif élévateur (1) selon l'une quelconque des revendications précédentes.

13. Système d'inspection et/ou de nettoyage selon la revendication précédente, dans lequel le dispositif élévateur (1) est disposé de manière amovible sur un chariot (8) du système d'inspection et/ou du système de nettoyage.

14. Système d'inspection et/ou système de nettoyage selon l'une quelconque des deux revendications précédentes, dans lequel ledit système est couplé à un dispositif de contrôle par une liaison de communication afin de recevoir, dudit dispositif de contrôle, des signaux de commande qui indiquent de quelle hauteur l'unité élévatrice (2) doit être soulevée, la liaison de communication étant formée de préférence sans fil.

15. Système d'inspection et/ou système de nettoyage selon l'une quelconque des revendications 12 à 14, dans lequel des moyens de travail sont disposés sur l'unité élévatrice (2), les moyens de travail comprenant un dispositif de prise de vues, une caméra satellite, un dispositif de rinçage, en particulier une tête de rinçage, un outil de préhension, un outil de fraisage ou des combinaisons de ceux-ci.
